# DEMANDE DE BREVET EUROPEEN

(11) **EP 3 148 041 A1**
(43) Date de publication de la demande: **29.03.2017**
(21) Numéro de dépôt: 16189551.1
(22) Date de dépôt: 19.09.2016
(51) Int. Cl.: H02J 7/00

(54) **DISPOSITIF ÉLECTRONIQUE DE CONNEXION/DÉCONNEXION POUR BATTERIE À HAUTE-TENSION ET PROCÉDÉ ASSOCIÉ**

(30) Priorité: 24.09.2015 FR 1559005
(71) Demandeur: SAFT, 93170 Bagnolet (FR)
(72) Inventeur: JAOUI, Younès, 33520 Bruges (FR); CLOTES, Jean-Yves, 33200 Bordeaux (FR); VASSELIN, Benoît, 33160 Saint Médard en Jalles (FR); MONSINJON, Stéphane, 33210 Saint Pierre de Mons (FR)
(74) Mandataire: Hirsch & Associés

(57) **Abrégé**

L'invention concerne un dispositif électronique de connexion/déconnexion (130) pour unité de stockage d'énergie électrique à haute tension (100) destinée à être chargée et déchargée asymétriquement, ladite unité de stockage étant disposée au sein d'un circuit électrique, ledit dispositif comprenant un interrupteur de charge (140) et un interrupteur de décharge (150) disposés en parallèle et dimensionnés de façon asymétrique pour la charge et la décharge de ladite unité de stockage (100), l'interrupteur de charge (140) étant destiné à bloquer, dans un premier sens de circulation, un courant électrique le parcourant, ledit premier sens de circulation étant opposé à un second sens de circulation dans lequel l'interrupteur de décharge (150) est destiné à bloquer un courant électrique le parcourant, ledit dispositif étant destiné à être activé lorsqu'une grandeur physique du courant électrique parcourant ledit circuit est supérieure à un seuil prédéterminé.

## Description

### DOMAINE TECHNIQUE

Le domaine technique de la présente invention est celui des unités de stockage d'énergie électrique. Plus particulièrement, la présente invention concerne un dispositif électronique de connexion/déconnexion pour une batterie d'accumulateurs électrochimiques à haute tension destinée à être chargée et déchargée asymétriquement. On entend par à haute tension une tension supérieure ou égale à 250 volts.

Un accumulateur électrochimique est un dispositif de production d'électricité dans lequel de l'énergie chimique est convertie en énergie électrique. L'énergie chimique est constituée par des composés électrochimiquement actifs déposés sur au moins une face d'électrodes disposées dans l'accumulateur. L'énergie électrique est produite par des réactions électrochimiques au cours d'une décharge de l'accumulateur. Les électrodes, disposées dans un conteneur, sont connectées électriquement à des bornes de sortie de courant qui assurent une continuité électrique entre les électrodes et un consommateur électrique auquel l'accumulateur est associé.

Afin d'augmenter la puissance délivrée, il est connu d'associer plusieurs accumulateurs étanches entre eux pour former une batterie. La batterie comporte alors une ou plusieurs branches parallèles d'accumulateurs reliés en série.

### ÉTAT DE LA TECHNIQUE

Dans l'état de la technique, pour protéger en sortie une batterie à haute tension de surintensités et détecter des courants de court-circuit, on utilisait deux interrupteurs statiques bidirectionnels disposés en série tête bêche. Cette solution convenait dans le cas des batteries basse tension, par exemple, jusqu'à 48V pour des puissances de quelques dizaines de kW.Cependant, dans l'art antérieur, on ne pouvait assurer un recouvrement entre la charge et la décharge pour des applications avec une tension de sortie élevée et pour des courants forts.

Pour cela l'utilisation de switch bidirectionnels en tension mis en parallèle est plus adaptée aux applications batteries hautes tension et fort courant pour des puissances de plusieurs dizaines de kW. Cependant, ce genre de dispositif ne permet pas d'obtenir une mesure et/ou un contrôle rapide et précis des courants d'appel et de court-circuit d'une batterie à haute tension.

On connaît par exemple du document DE 10 2013 222462 un dispositif dans lequel deux interrupteurs haute tension, comportant des diodes en série, sont positionnés en parallèle, ce qui ne permet pas une utilisation asymétrique, avec des courants de défaut très élevés dans le sens de la décharge et des courants faibles dans le sens de la charge.

Pour résoudre ce problème, dans ce document, on ajoute une branche de limitation externe avec une résistance, mais cela augmente le volume et le coût du dispositif

On connaît également des dispositifs tels que ceux décrits dans US 2007/210758 ou US 2015/263559, dans lesquels les circuits de charge et de décharge sont disposés en série et ne permettent donc pas d'optimiser la branche de charge par rapport à la branche décharge.

Il existe donc un réel besoin de réaliser un dispositif électronique capable de mesurer et de contrôler rapidement et précisément des courants d'appel et de court-circuit d'une batterie à haute tension en prenant en compte son mode de fonctionnement.

### RÉSUMÉ DE L'INVENTION

A cette fin, la présente invention propose un dispositif électronique de connexion/déconnexion pour unité de stockage d'énergie électrique à haute tension destinée à être chargée et déchargée asymétriquement, ladite unité de stockage étant disposée au sein d'un circuit électrique, ledit dispositif comprenant un interrupteur de charge et un interrupteur de décharge disposés en parallèle et dimensionnés de façon asymétrique pour la charge et la décharge de ladite unité de stockage, l'interrupteur de charge étant destiné à bloquer, dans un premier sens de circulation, un courant électrique le parcourant, ledit premier sens de circulation étant opposé à un second sens de circulation dans lequel l'interrupteur de décharge est destiné à bloquer un courant électrique le parcourant, ledit dispositif étant destiné à être activé lorsqu'une grandeur physique du courant électrique parcourant ledit circuit est supérieure à un seuil prédéterminé.

Grâce à ces dispositions, on assure le recouvrement des modes de fonctionnement en charge et en décharge d'une unité de stockage d'énergie électrique à haute tension. Autrement dit, le dispositif électronique selon l'invention permet de réaliser un nombre illimité de cycles successifs de fonctionnement d'une telle unité de stockage, chacun desdits cycles comprenant une charge et une décharge.

L'invention concerne en particulier les batteries d'accumulateurs électriques, mais aussi les convertisseurs de courant et les générateurs de courant continu.

Selon un mode de réalisation de ce dispositif électronique,
- l'interrupteur de décharge est destiné à gérer des courants de court-circuit du circuit électrique, et
- l'interrupteur de décharge et l'interrupteur de charge sont destinés à gérer des courants d'appel dudit circuit électrique.

Grâce à ces dispositions, on minimise les risques liés à une détection retardée et à une non-détection d'un courant de court-circuit si le seuil de détection d'un tel courant de court-circuit est inférieur au courant d'appel. Typiquement, l'ordre de grandeur d'un courant que peut atteindre le courant de défaut est de 8000 ampères pour une branche, une batterie étant constituée de plusieurs branches en parallèle, lorsqu'un organe de coupure est utilisé.

Selon un autre mode de réalisation de ce dispositif électronique, chaque interrupteur comporte une diode de puissance et un transistor de puissance disposés en série.

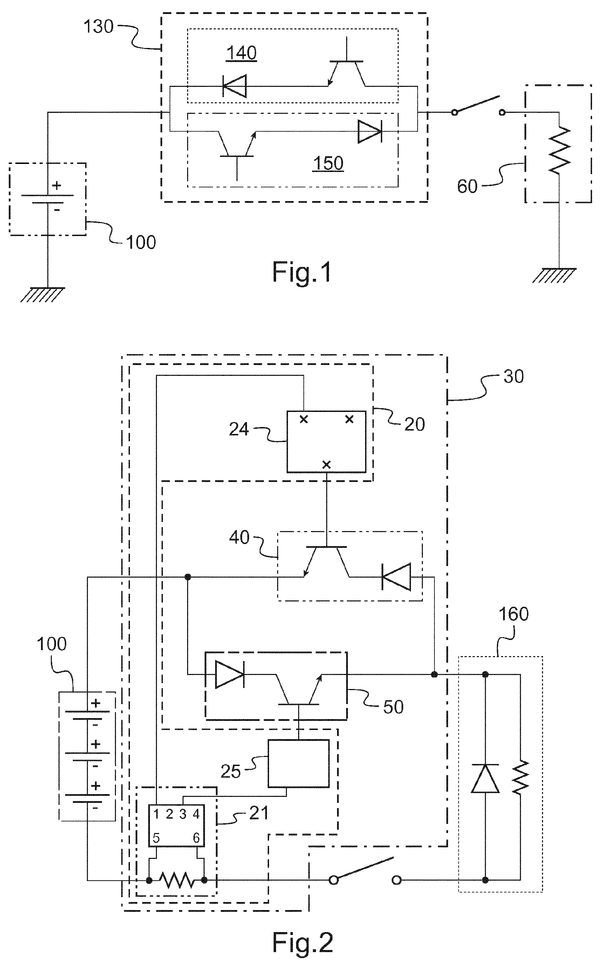

Une diode de roue libre, telle que celle décrite en regard de la figure 2, peut être montée en parallèle de la charge et directement au plus près du circuit électronique.

Selon encore un mode de réalisation de ce dispositif électronique,
- la diode de puissance est de type bipolaire, Schottky ou SiC, et
- le transistor de puissance est de type bipolaire, IGBT, MOSFET ou JFET.

Grâce à ces dispositions, l'utilisation d'un coupe-circuit à fusible n'est plus nécessaire, ce qui représente un avantage considérable puisque, dans l'état de la technique, suite à la fusion d'un tel coupe-circuit, une batterie restait indisponible jusqu'à l'intervention d'un opérateur. Selon l'invention, un coupe-circuit à fusible peut toutefois être utilisé pour jouer un rôle de redondance de protection.

Selon encore un autre mode de réalisation de ce dispositif électronique, l'interrupteur de charge est un contacteur électromécanique.

Selon des caractéristiques particulières, ce dispositif électronique comporte en outre
- un capteur destiné à mesurer l'au moins une grandeur physique du courant électrique,
- une unité de contrôle destinée à comparer l'au moins une grandeur physique mesurée au seuil prédéterminé, et
- un dispositif de pilotage destiné à piloter chaque interrupteur.

Grâce à ces dispositions, on ne déconnecte l'unité de stockage d'énergie électrique que lorsque cela est nécessaire.

Selon d'autres caractéristiques particulières de ce dispositif électronique, le dispositif de pilotage est électriquement isolé de l'au moins un interrupteur qu'il pilote.

Grâce à ces dispositions, on protège l'intégrité du dispositif de pilotage.

Selon encore d'autres caractéristiques particulières, ce dispositif électronique comporte en outre au moins un limiteur de courant comprenant un transistor et un circuit temporisateur de commande.

Grâce à ces dispositions, on fait fonctionner au moins l'interrupteur de décharge en mode linéaire pendant de courtes durées.

L'invention a également pour objet un ensemble comportant un tel dispositif électronique et une unité de stockage d'énergie électrique à haute tension destinée à être chargée et déchargée asymétriquement, ladite unité de stockage étant disposée au sein d'un circuit électrique, ladite unité de stockage étant une batterie d'accumulateurs électrochimiques dont la tension est supérieure ou égale à 250 volts.

L'invention a également pour objet un procédé de gestion de courants de court-circuit et de courants d'appel d'un circuit électrique au moyen d'un tel dispositif électronique, dans lequel on active ledit dispositif lorsqu'une grandeur physique du courant électrique parcourant ledit circuit est supérieure à un seuil prédéterminé.

Les avantages liés à ce procédé de gestion, étant similaires à ceux du dispositif électronique selon l'invention, ne sont pas rappelés ici.

Selon un mode de réalisation de ce procédé électronique,
- on détermine un seuil de durée d'activation du dispositif électronique,
- on désactive le dispositif électronique lorsque la durée atteint ledit seuil de durée.

Grâce à ces dispositions, on minimise les risques d'échauffement du dispositif électronique selon l'invention.

Selon un autre mode de réalisation de ce procédé électronique,
- on détermine un seuil de durée de dépassement en fonction de la valeur mesurée de la grandeur physique,
- on mesure la durée écoulée depuis le moment où le seuil prédéterminé est atteint par la grandeur physique mesurée,
- on compare ladite durée mesurée audit seuil de durée, puis
- on n'active le dispositif électronique que lorsque la durée mesurée atteint ledit seuil de durée.

Grâce à ces dispositions, on optimise la durée de fonctionnement du dispositif électronique selon l'invention.

Selon encore un autre mode de réalisation de ce procédé électronique,
- on détermine un seuil de température,
- on mesure une température à proximité ou au sein du circuit électrique,
- on compare ladite température mesurée audit seuil de température, puis
- on n'active le dispositif électronique que lorsque ladite température mesurée est supérieure audit seuil de température.

Grâce à ces dispositions, on minimise les risque d'échauffement du dispositif électronique selon l'invention.

Selon des caractéristiques particulières de ce procédé électronique,
- on détermine une durée maximale d'activité du limiteur de courant,
- on mesure une durée d'activité dudit limiteur de courant,
- on compare ladite durée mesurée à ladite durée maximale, puis
- on désactive ledit limiteur de courant lorsque la durée mesurée atteint ladite durée maximale.

Grâce à ces dispositions, on minimise les risques d'échauffement du limiteur de courant selon l'invention.

L'invention a également pour objet un procédé de fabrication d'un tel dispositif électronique, dans lequel
- on détermine au moins une grandeur physique du courant électrique par lequel chaque interrupteur est destiné à être parcouru, puis
- on dimensionne indépendamment chaque interrupteur en fonction de ladite grandeur physique du courant électrique par lequel il est destiné à être parcouru.

Grâce à ces dispositions, on optimise la taille, le coût et le rendement des composants de puissance du dispositif électronique selon l'invention, et donc le coût global de fabrication dudit dispositif électronique.

### BRÈVE DESCRIPTION DES FIGURES

D'autres caractéristiques et avantages de l'invention apparaîtront à la lecture de la description qui suit de trois modes de réalisation préférés de l'invention, donnés à titre d'exemple et en référence aux figures annexées qui montrent :
- figure 1, un schéma d'un premier exemple de dispositif électronique selon l'invention ;
- figure 2, un schéma d'un deuxième exemple de dispositif électronique selon l'invention ;
- figure 3, un schéma d'un troisième exemple de dispositif électronique selon l'invention ;
- figure 4, une représentation graphique d'un exemple d'évolution de l'intensité du courant parcourant le circuit électrique au sein duquel est disposé le dispositif électronique selon l'invention, en fonction du temps.

Dans la suite de la description, les éléments identiques ou de fonction identique portent le même signe de référence. À fin de concision de la présente description, les éléments identiques aux différents exemples ne sont pas décrits en regard de chacun de ces exemples. En d'autres termes, seules les différences entre les différents exemples sont décrites de manière détaillée, les éléments communs étant décrits en regard d'un seul exemple.

Par ailleurs, dans la suite de la description, les valeurs numériques mentionnées, quoique non limitatives, se sont révélées aux essais comme fournissant les résultats les plus avantageux.

### EXPOSÉ DE MODES DE RÉALISATION

La figure 1 représente un premier mode de réalisation d'un dispositif électronique de connexion/déconnexion 130 selon l'invention. Le dispositif électronique 130 est diposé au sein d'un circuit électrique, entre d'un côté, une unité de stockage d'énergie électrique à haute tension 100, ici une batterie d'accumulateurs électriques appelée batterie, et de l'autre côté un récepteur électrique 60.

La batterie 100 est destinée à être chargée et déchargée asymétriquement, c'est-à-dire avec un courant de charge différent du courant de décharge. Typiquement, le courant de charge est dix fois inférieur au courant de décharge.

Le dispositif électronique 130 comprend un interrupteur de charge 140 et un interrupteur de décharge 150 disposés en parallèle, et dimensionnés de façon asymétrique pour la charge et la décharge de la batterie 100, c'est-à-dire que le seuil du courant de charge de l'interrupteur de charge 140 est différent du seuil de courant de décharge de l'interrupteur de décharge 150..

De préférence, les interrupeurs 140 et 150 sont des interrupteurs au silicium.

L'interrupteur de charge 140 est destiné à bloquer, dans un premier sens de circulation, un courant électrique le parcourant, ledit premier sens de circulation étant opposé à un second sens de circulation dans lequel l'interrupteur de décharge 150 est destiné à bloquer un courant électrique le parcourant.

Chaque interrupteur 140 et 150 comporte une diode de puissance et un transistor de puissance disposés en série et est activé lorsqu'une grandeur physique du courant électrique le parcourant est supérieure à un seuil prédéterminé. Le rôle de la diode est, d'une part, de rendre l'interrupteur au sein duquel elle est disposée réversible en tension et, d'autre part, de bloquer les courants inverses.

Typiquement, le seuil du courant de décharge est dix fois supérieur au seuil de courant de charge car l'interrupteur de décharge 150 est destiné à gérer des courants de court-circuit ainsi que des courants d'appel du circuit électrique tandis que l'interrupteur de charge 140 est uniquement destiné à gérer des courants d'appel dudit circuit électrique.

De préférence, la diode de puissance est de type bipolaire, Schottky ou SiC, et le transistor de puissance est de type bipolaire, IGBT (Insulated Gate Bipolar Transistor, en langue anglais), MOSFET (Metal Oxide Semiconductor Field Effect Transistor, en langue anglaise) ou JFET (Junction Field Effect Transistor, en langue anglaise).

Dans une variante, l'interrupteur de charge 140 est un contacteur électromécanique.

La figure 2 représente un deuxième mode de réalisation d'un dispositif électronique 30 selon l'invention. Le dispositif électronique 30 comporte en outre, par rapport au dispositif électronique 130 de la figure 1 :
- un capteur 21 destiné à mesurer la grandeur physique du courant électrique,
- une unité de contrôle 20 destinée à comparer la grandeur physique mesurée au seuil prédéterminé, et
- deux dispositifs de pilotage 24 et 25, chacun d'entre eux étant destiné à piloter un interrupteur 40 ou 50, respectivement.

Typiquement, les dispositifs de pilotage 24 et 25 sont de type microcontrôleur, PLD (programmable logic device, en langue anglaise), FPGA (field-programmable gate array, en langue anglaise), EPLD (erasable programmable logic device, en langue anglaise), CPLD (complex programmable logic device en langue anglaise), PAL (programmable array logic, en langue anglaise), ou PLA (programmable logic array, en langue anglaise).

De préférence, chaque dispositif de pilotage 24 et 25 est électriquement isolé de l'interrupteur 40 et 50 qu'il pilote. Typiquement, l'isolation des dispositifs de pilotage est assurée par des fibres optiques. Dans une variante, cette isolation est réalisée au moyen de transformateurs d'isolement.

De préférence, la grandeur physique du courant électrique est son intensité et est mesurée sur le moins ou sur le plus de la batterie au moyen d'une dérivation et d'un capteur de courant, i.e. d'un ampèremètre. Dans ce cas, les seuils prédéterminés sont des seuils d'intensité.

Dans une variante, la grandeur physique du courant électrique est sa tension et est mesurée sur la polarité négative ou positive de la batterie au moyen d'une dérivation et d'un voltmètre. Dans ce cas, les seuils prédéterminés sont des seuils de tension.

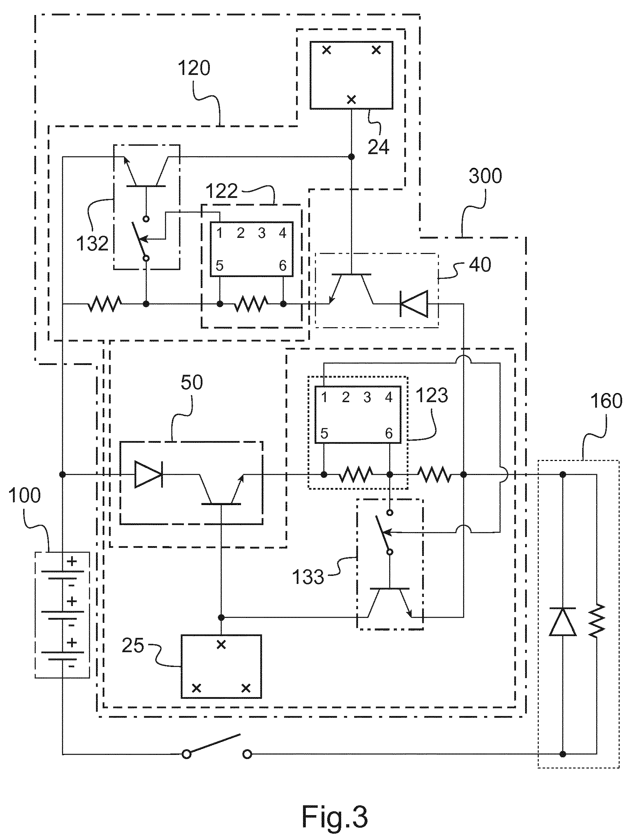

La figure 3 représente un troisième mode de réalisation d'un dispositif électronique 300 selon l'invention.

Le dispositif électronique 300 comporte en outre, par rapport au dispositif électronique 130 de la figure 1,
- deux capteurs 122 et 123 destinés à mesurer l'au moins une grandeur physique du courant électrique,
- une unité de contrôle 120 destinée à comparer l'au moins une grandeur physique mesurée au seuil prédéterminé, et
- un dispositif de pilotage 24 et 25 destiné à piloter chaque interrupteur 40 et 50, respectivement.

Le dispositif électronique 300 comporte en outre, par rapport au dispositif électronique 30 de la figure 2, au moins un, ici deux, limiteur(s) de courant 132 et 133 comprenant un transistor et un circuit temporisateur de commande.

Le limiteur de courant 132 est associé à l'interrupteur de charge 40 et au capteur 122 tandis que le limiteur de courant 133 est associé à l'interrupteur de décharge 50 et au capteur 123.

Lorsque le dispositif électronique selon l'invention ne comporte qu'un seul limiteur de courant, celui-ci est associé à l'interrupteur de décharge 50 et au capteur 123.

Les limiteurs de courant 132 et 133 effectuent une limitation instantanée, i.e. un écrêtage, pendant quelques microsecondes de l'intensité du courant électrique.

Par exemple, certaines applications ont une limitation instantanée de l'ordre de 15 ampères pour l'interrupteur de charge et de 2500 ampères pour l'interrupteur de décharge 50.

L'invention concerne également un procédé de fabrication d'un des dispositifs électroniques 30, 130 ou 300 tels que précédemment décrits, dans lequel
- on détermine la grandeur physique du courant électrique par lequel chaque interrupteur 40 et 50 ou 140 et 150 est destiné à être parcouru, puis
- on dimensionne indépendamment chaque interrupteur 40 et 50 ou 140 et 150 en fonction de ladite grandeur physique du courant électrique par lequel il est destiné à être parcouru.

L'invention concerne enfin un procédé de gestion de courants de court-circuit et de courants d'appel du circuit électrique au moyen d'un des dispositifs électroniques 30, 130 ou 300 tels que précédemment décrits, dans lequel on active ledit dispositif lorsqu'une grandeur physique du courant électrique parcourant ledit circuit est supérieure à un seuil prédéterminé.

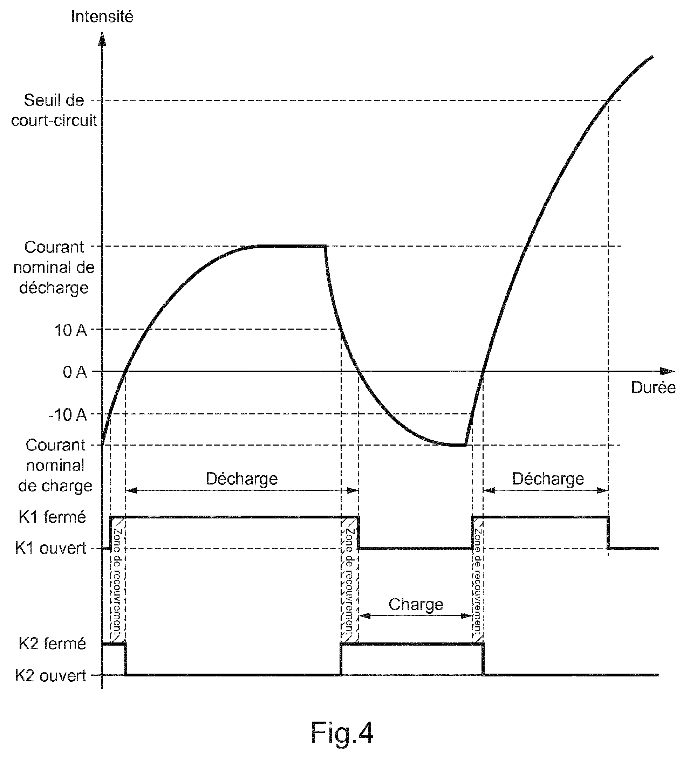

La figure 4 représente graphiqument un exemple d'évolution de l'intensité du courant parcourant le circuit électrique au sein duquel est disposé l'un des dispositifs électroniques 30, 130 ou 300 tels que précédemment décrits, en fonction du temps.

A l'instant 0, l'intensité du courant électrique présente une valeur nominale de charge prédéfinie, ici inférieure à 10 ampères, l'interrupteur de charge 40 ou 140 est fermé, i.e. laisse passer le courant électrique et l'interrupteur de décharge 50 ou 150 est ouvert, i.e. empêche le courant électrique de passer.

Dans l'exemple, un premier cycle débute lorsque l'intensité du courant électrique atteint -10 ampères, l'interrupteur de décharge 50 ou 150 se ferme puis, lorsque l'intensité du courant électrique devient nulle après un laps de temps appelé premier temps de recouvrement, l'interrupteur de charge 40 ou 140 s'ouvre.

Le circuit est alors dans une phase de décharge durant laquelle l'intensité du courant électrique atteint une valeur nominale de décharge prédéfinie, ici supérieure à 10 ampères, qu'il conserve jusqu'à redescendre à +10 ampères. A cest instant, l'interrupteur de charge 40 ou 140 se referme puis, lorsque l'intensité du courant électrique redevient nulle après un laps de temps appelé deuxième temps de recouvrement, l'interrupteur de décharge 50 ou 150 se réouvre.

Le circuit est alors dans une phase de charge durant laquelle l'intensité du courant électrique atteint la valeur nominale de charge prédéfinie qu'il conserve jusqu'à remonter à -10 ampères. A cet instant, on entame un nouveau cycle qui commence, comme le premier cycle, par une fermeture de l'interrupteur de décharge 50 ou 150.

Au cours de ce deuxième cycle, lorsque l'intensité du courant électrique devient nulle après un laps de temps appelé premier temps de recouvrement, l'interrupteur de charge 40 ou 140 s'ouvre puis l'intensité du courant électrique augmente mais, contraitrement au premier cycle, ne conserve pas la valeur de décharge prédéfinie. En effet, dans ce deuxième cycle, l'intensité du courant électrique continue à augmenter jusqu'à atteindre un seuil d'intensité représentatif d'un courant de court-circuit.

A cet instant, l'interrupteur de décharge 50 ou 150 se réouvre et l'interrupteur de charge 40 ou 140 reste ouvert.

Pour diminuer encore le risque d'échauffement du circuit électrique au sein duquel est disposé un des dispositifs électroniques 130 ou 300 tels que précédemment décrits, plusieurs dispositions, ici appelées variantes, sont mises en oeuvre et détaillées ci-après.

Dans une première variante, on détermine en outre un seuil de durée d'activation d'un des dispositifs électroniques 130 ou 300 tels que précédemment décrits et on désactive le dispositif électronique lorsque la durée atteint ledit seuil de durée.

Dans une deuxième variante,
- on détermine un seuil de durée de dépassement en fonction de la valeur mesurée de la grandeur physique,
- on mesure la durée écoulée depuis le moment où le seuil prédéterminé est atteint par la grandeur physique mesurée,
- on compare ladite durée mesurée audit seuil de durée, puis
- on n'active le dispositif électronique que lorsque la durée mesurée atteint ledit seuil de durée.

Dans une troisième variante,
- on détermine un seuil de température,
- on mesure une température à proximité ou au sein du circuit électrique,
- on compare ladite température mesurée audit seuil de température, puis
- on n'active le dispositif électronique que lorsque ladite température mesurée est supérieure audit seuil de température.

Dans une quatrième variante, pour le dispositif électroniques 300 de la figure 3 uniquement,
- on détermine une durée maximale d'activité des limiteurs de courant 132 et 133,
- on mesure une durée d'activité desdits limiteurs de courant,
- on compare ladite durée mesurée à ladite durée maximale, puis
- on désactive l'un et/ou l'autre limiteur de courant 132 et/ou 133 lorsque la durée mesurée atteint la durée maximale qui lui est propre.

Bien entendu, la présente invention n'est pas limitée aux exemples et aux modes de réalisation décrits et représentés, mais elle est susceptible de nombreuses variantes accessibles à l'homme de l'art. En particulier, les valeurs numériques indiquées plus haut ont été données à titre d'exemple uniquement.

## Revendications

1. Dispositif électronique de connexion/déconnexion (30 ; 130 ; 300) pour unité de stockage d'énergie électrique à haute tension (100) destinée à être chargée et déchargée asymétriquement, ladite unité de stockage étant disposée au sein d'un circuit électrique, ledit dispositif comprenant un interrupteur de charge (40 ; 140) et un interrupteur de décharge (50 ; 150) disposés en parallèle et dimensionnés de façon asymétrique pour la charge et la décharge de ladite unité de stockage (100), l'interrupteur de charge (40 ; 140) étant destiné à bloquer, dans un premier sens de circulation, un courant électrique le parcourant, ledit premier sens de circulation étant opposé à un second sens de circulation dans lequel l'interrupteur de décharge (50 ; 150) est destiné à bloquer un courant électrique le parcourant, ledit dispositif étant destiné à être activé lorsqu'une grandeur physique du courant électrique parcourant ledit circuit est supérieure à un seuil prédéterminé.

2. Dispositif électronique selon la revendication 1, **caractérisé en ce que**
- l'interrupteur de décharge (50 ; 150) est destiné à gérer des courants de court-circuit du circuit électrique, et
- l'interrupteur de décharge (50 ; 150) et l'interrupteur de charge (40 ; 140) sont destinés à gérer des courants d'appel dudit circuit électrique.

3. Dispositif électronique selon la revendication 1 ou 2, **caractérisé en ce que** chaque interrupteur (40 ; 140 ; 50 ; 150) comporte une diode de puissance et un transistor de puissance disposés en série.

4. Dispositif électronique selon la revendication 3, **caractérisé en ce que**
- la diode de puissance est de type bipolaire, Schottky ou SiC, et
- le transistor de puissance est de type bipolaire, IGBT, MOSFET ou JFET.

5. Dispositif électronique selon la revendication 1 ou 2, **caractérisé en ce que** l'interrupteur de charge (40 ; 140) est un contacteur électromécanique.

6. Dispositif électronique selon l'une quelconque des revendications 1 à 5, **caractérisé en ce qu'**il comporte en outre
- un capteur (21 ; 122 ; 123) destiné à mesurer l'au moins une grandeur physique du courant électrique,
- une unité de contrôle (20 ; 120) destinée à comparer l'au moins une grandeur physique mesurée au seuil prédéterminé, et
- un dispositif de pilotage (24 ; 25) destiné à piloter chaque interrupteur (40 ; 50).

7. Dispositif électronique selon la revendication 6, **caractérisé en ce que** le dispositif de pilotage (24 ; 25) est électriquement isolé de l'au moins un interrupteur qu'il pilote.

8. Dispositif électronique selon l'une quelconque des revendications 5 à 7, **caractérisé en ce qu'**il comporte en outre au moins un limiteur de courant (132 ; 133) comprenant un transistor et un circuit temporisateur de commande.

9. Ensemble comportant un dispositif électronique selon l'une quelconque des revendications 1 à 8 et une unité de stockage d'énergie électrique à haute tension (100) destinée à être chargée et déchargée asymétriquement, ladite unité de stockage étant disposée au sein d'un circuit électrique, ladite unité de stockage étant une batterie d'accumulateurs électrochimiques dont la tension est supérieure ou égale à 250 volts.

10. Procédé de gestion de courants de court-circuit et de courants d'appel d'un circuit électrique au moyen d'un dispositif électronique (130 ; 300) selon l'une quelconque des revendications 1 à 8, dans lequel on active ledit dispositif lorsqu'une grandeur physique du courant électrique parcourant ledit circuit est supérieure à un seuil prédéterminé.

11. Procédé électronique selon la revendication 10, **caractérisé en ce que**
- on détermine un seuil de durée d'activation du dispositif électronique,
- on désactive le dispositif électronique lorsque la durée atteint ledit seuil de durée.

12. Procédé électronique selon la revendication 10 ou 11, **caractérisé en ce que**
- on détermine un seuil de durée de dépassement en fonction de la valeur mesurée de la grandeur physique,
- on mesure la durée écoulée depuis le moment où le seuil prédéterminé est atteint par la grandeur physique mesurée,
- on compare ladite durée mesurée audit seuil de durée, puis
- on n'active le dispositif électronique que lorsque la durée mesurée atteint ledit seuil de durée.

13. Procédé selon l'une quelconque des revendication 10 à 12, **caractérisé en ce que**
- on détermine un seuil de température,
- on mesure une température à proximité ou au sein du circuit électrique,
- on compare ladite température mesurée audit seuil de température, puis
- on n'active le dispositif électronique que lorsque ladite température mesurée est supérieure audit seuil de température.

14. Procédé selon l'une quelconque des revendications 10 à 13, **caractérisé en ce que**
- on détermine une durée maximale d'activité du limiteur de courant (132; 133),
- on mesure une durée d'activité dudit limiteur de courant,
- on compare ladite durée mesurée à ladite durée maximale, puis
- on désactive ledit limiteur de courant lorsque la durée mesurée atteint ladite durée maximale.

15. Procédé de fabrication d'un dispositif électronique selon l'une quelconque des revendications 1 à 8, **caractérisé en ce que**
- on détermine au moins une grandeur physique du courant électrique par lequel chaque interrupteur est destiné à être parcouru, puis
- on dimensionne indépendamment chaque interrupteur (40 ; 140 ; 50 ;150) en fonction de ladite grandeur physique du courant électrique par lequel il est destiné à être parcouru.
